# FASCICULE DE BREVET EUROPEEN

(11) **EP 1 938 348 B1**
(45) Date de publication et mention de la délivrance du brevet: **06.07.2011**
(21) Numéro de dépôt: 06807094.5
(22) Date de dépôt: 09.10.2006
(51) Int. Cl.: H01H 27/06

(54) **INTERRUPTEUR A FAIBLE COURANT POUR VERROU D'ANTIVOL AUTOMOBILE**
NIEDERSTROMSCHALTER FÜR EINEN KRAFTFAHRZEUG-ANTIDIEBSTAHLRIEGEL
LOW CURRENT SWITCH FOR MOTOR CAR ANTI-THEFT LOCK

(30) Priorité: 11.10.2005 FR 0510348
(43) Date de publication de la demande: 02.07.2008
(73) Titulaire: Valeo Sécurité Habitacle, 94046 Créteil Cedex (FR)
(72) Inventeur: GIACOMIN, Fabrice, F-94042 Créteil Cedex (FR); CANARD, Louis, F-94042 Créteil Cedex (FR)
(74) Mandataire: Pothmann, Karsten
(86) Numéro de dépôt international: PCT/EP2006/067208
(87) Numéro de publication internationale: WO 2007/042502

(56) Documents cités:
- US-A- 3 944 762
- US-A- 5 946 956
- US-B1- 6 223 571

## Description

L'invention concerne un interrupteur à faible courant pour verrou d'antivol automobile.

Un tel verrou d'antivol, en particulier pour la mise en marche et l'arrêt d'au moins une unité d'opération d'un véhicule automobile, comprend un stator et un rotor pouvant être entraîné en rotation dans le stator, par exemple au moyen d'une clé classique ou électronique. Il possède au moins un premier élément de commutation solidarisé au rotor et qui coopère avec au moins un second élément de commutation solidarisé au stator.

Un tel verrou avec interrupteur, à faible courant, est décrit dans le document de brevet US 6 223 571.

Selon ce document de l'art antérieur, le premier élément de commutation est un élément magnétique, qui peut être un aimant permanent, est solidarisé au rotor par l'intermédiaire d'une came elle-même solidarisée à l'extrémité interne du rotor opposée à l'entrée de clé portée par son extrémité externe. Cet aimant est disposé sur la face frontale de cette came.

Les seconds éléments de commutation sont au nombre de deux et peuvent être constitués d'ampoules Reed. Ces ampoules Reed sont électriquement reliées à un connecteur par leurs broches souples et sont solidaires du stator, disposées sur un plan parallèle à la face frontale portant l'aimant.

Ce type d'agencement pose les problèmes techniques suivants.

Une ampoule Reed présente une zone de sensibilité maximale à proximité de son plan de symétrie transversale, mais une sensibilité nulle au niveau de la connexion de ses broches souples. Une disposition relative de l'aimant et de l'ampoule Reed en face à face, comme décrite dans ce document, induit une perte de détection au niveau de ses connexions.

L'agencement décrit dans ce document de l'art antérieur est relativement encombrant, en particulier dans le sens de l'axe longitudinal du rotor.

Par ailleurs et surtout, ce type d'interrupteur connu est totalement interne au verrou et aucune pièce, hormis le connecteur, ne peut être montée ou démontée individuellement. Seul le connecteur est indépendant du verrou. En cas de défection au niveau des ampoules Reed, tout l'interrupteur doit être changé, avec le mécanisme de verrou associé.

Enfin, la liaison du connecteur sur les ampoules Reed par une carte de circuits imprimés et des câbles électriques, telle que décrite dans ce document, est relativement complexe et coûteuse.

L'invention résout ces problèmes et, pour ce faire, elle propose un interrupteur, en particulier pour la mise en marche et l'arrêt d'au moins une unité d'opération d'un véhicule automobile, destiné à coopérer avec un verrou d'antivol comprenant un stator (1) et un rotor (2) pouvant être entraîné en rotation dans le stator et possédant au moins un aimant permanent (6) solidarisé au rotor (2), interrupteur comprenant au moins deux ampoules Reed (7A, 7B) pourvues de broches souples (8A, 8B) et reliées électriquement par leurs broches aux contacts (10A, 10B, 10C) d'un connecteur, caractérisé en ce que lesdites ampoules Reed sont disposées sur un corps de connecteur (4) destiné à être fixé sur ledit stator (1) dans une position dite de fonctionnement et de façon amovible.

Selon un mode de réalisation préféré de l'invention, 'axe longitudinal des dites ampoules Reed est sensiblement parallèle à l'axe nord-sud du dit aimant, en position de fonctionnement.

Et, avantageusement, l'axe longitudinal des dites ampoules Reed est sensiblement parallèle à l'axe longitudinal du rotor, lesdites ampoules Reed étant disposées avec leur plan de symétrie transversal sensiblement dans un même plan contenant également l'aimant dans ladite position de fonctionnement.

L'invention assure une efficacité maximale, grâce à une détection du champ magnétique réalisée à proximité du plan de symétrie transversal des ampoules Reed.

L'invention a également pour avantage de proposer un agencement interrupteur peu encombrant, l'espace gagné dans le sens longitudinal par rapport à l'art antérieur pouvant être exploité pour loger d'autres équipements.

En variante, l'axe longitudinal des dites ampoules Reed peut être sensiblement perpendiculaire à l'axe longitudinal du rotor, lesdites ampoules Reed étant disposées avec leur plan de symétrie longitudinal sensiblement dans un même plan contenant également l'aimant dans ladite position de fonctionnement.

Selon un mode de réalisation préféré, lesdites ampoules Reed sont directement fixées aux dits contacts du connecteur par leurs broches.

De préférence, lesdits contacts comportent des prolongements jusqu'aux broches de celles-ci.

En variante, lesdites ampoules Reed peuvent être reliées aux dits contacts du connecteur par l'intermédiaire d'une carte de circuit imprimé.

Lesdits contacts peuvent présenter un axe longitudinal sensiblement parallèle à celui des dites ampoules Reed.

Ledit corps de connecteur peut être fixé au stator par un agencement de rail et de glissière.

Avantageusement, ledit agencement de rail et de glissière est sensiblement parallèle à l'axe longitudinal du rotor.

De préférence, ledit corps de connecteur comporte un dispositif d'encliquetage sur le stator.

L'invention concerne également un verrou d'antivol destiné à être équipé d'un interrupteur tel que précisé ci-dessus, dont ledit aimant est porté par la face frontale d'une came solidarisée à l'extrémité interne du rotor.

De préférence ; ledit aimant est en matière plastoferrite et est surmoulé sur la dite came. L'invention est décrite ci-après plus en détail à l'aide de figures ne représentant qu'un mode de réalisation préféré de l'invention.
La figure 1 est une vue en perspective d'un interrupteur conforme à l'invention, équipant un verrou d'antivol.
La figure 2 est une vue en perspective avec coupe partielle, d'un interrupteur conforme à l'invention, équipant un verrou d'antivol.
Les figures 3A à 3E sont des vues partielles, d'un interrupteur conforme à l'invention, respectivement de dessous, de face, en coupe longitudinale verticale, de côté et en coupe longitudinale horizontale.
La figure 4 est une vue en coupe transversale, d'un interrupteur conforme à l'invention, équipant un verrou d'antivol.
Les figures 5A à 5C illustrent le fonctionnement d'un interrupteur conforme à l'invention.
Les figures 6A et 6B sont des vues en coupe longitudinale et en perspective éclatée d'une variante de réalisation de l'invention.

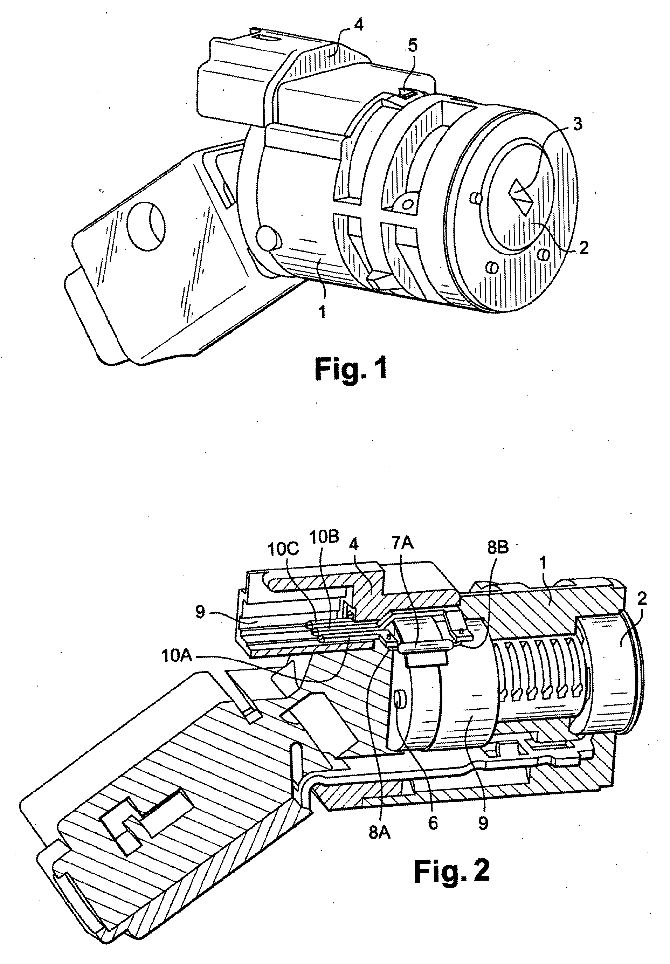

Comme visible sur la figure 1, un verrou d'antivol, en particulier pour la mise en marche et l'arrêt d'au moins une unité d'opération d'un véhicule automobile, comprend un stator 1 et un rotor 2 pouvant être entraîné en rotation dans le stator, par exemple au moyen d'une clé introduite dans une entrée de clé 3 disposée à l'extrémité externe du rotor 2.

Un corps de connecteur 4 est fixé en position de fonctionnement sur le stator 1 de façon amovible et comporte à son extrémité opposée aux contacts un dispositif d'encliquetage 5 sur le stator, constitué d'un orifice venant s'encliqueter sur une languette élastique agencée sur le stator.

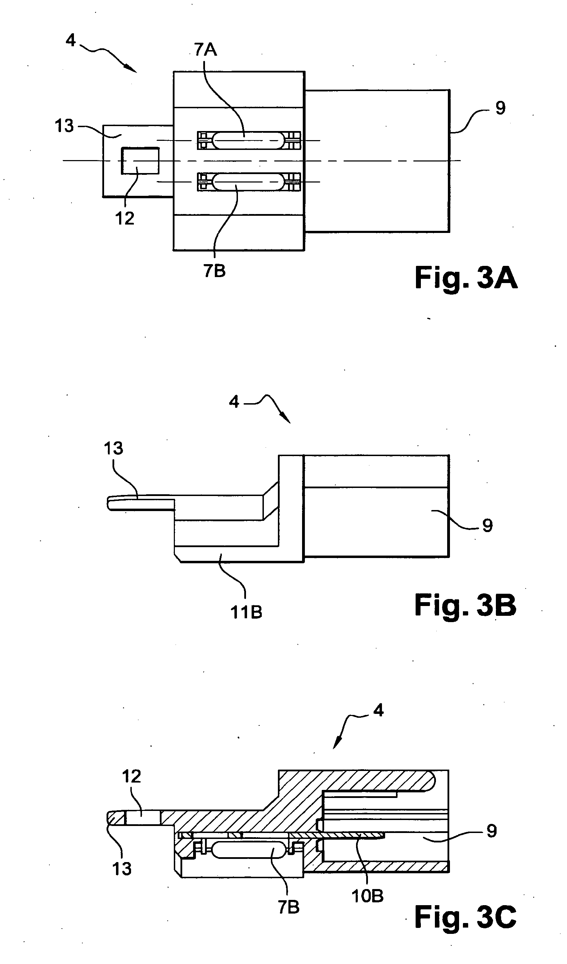

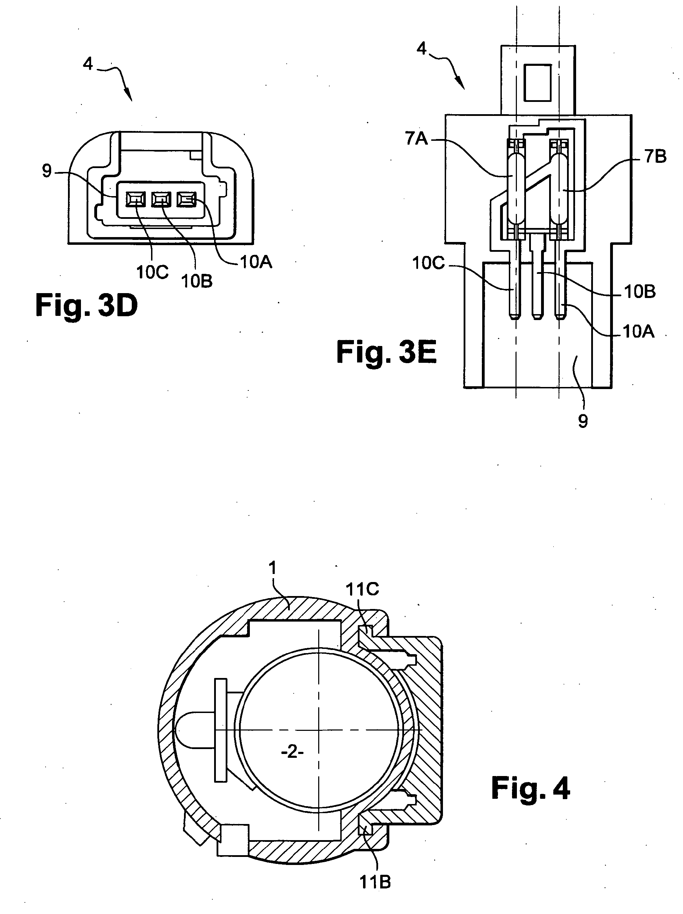

La constitution du corps de connecteur est particulièrement visible sur les figures 2 et 3.

L'interrupteur possède un aimant permanent 6 solidarisé au rotor et qui coopère avec au moins deux ampoules Reed 7A, 7B pourvues de broches souples 8A, 8B. L'aimant 6 est porté par la face frontale d'une came 9 solidarisée à l'extrémité interne du rotor 2.

Cet aimant peut être en ferrite ou en alliage néodyme / fer / bore ou autre et être emmanché dans une cavité prévue dans la came. Avantageusement, il peut également être en matière plastoferrite et être surmoulé sur cette came. Eventuellement, la came peut être en plastoferrite et l'aimant formé par polarisation locale.

Les ampoules Reed sont solidarisées au stator 2 par l'intermédiaire du corps de connecteur 4 et sont reliées électriquement par leurs broches aux contacts d'un connecteur 9. Les ampoules Reed 8A, 8B, sont disposées sur le corps de connecteur, avec leur axe longitudinal sensiblement parallèle à l'axe longitudinal du rotor 1.

Les ampoules Reed sont directement fixées aux trois contacts du connecteur 9 par leurs broches. Les contacts 10A, 10B, 10C, présentent un axe longitudinal sensiblement parallèle à celui des ampoules Reed et comportent des prolongements jusqu'aux broches de celles-ci. Ces prolongements sont particulièrement visibles sur la figure 3E. Le contact central 10B est prolongé selon une forme en Té dont chaque extrémité est reliée à une broche de chaque ampoule Reed. Les deux autres contacts 10A, 10C, sont connectés respectivement à l'autre broche de chaque ampoule Reed. De préférence, ses connexions entre contacts et broches sont réalisées par soudage.

Le corps de connecteur 4 est fixé au stator 2 par un agencement de rail et de glissière sensiblement parallèle à l'axe longitudinal du rotor et vu en coupe sur la figure 4. Plus précisément, le corps de connecteur 4 comporte sur chacun de ses côtés une nervure 11A, 11B, venant s'emboîter dans un rail correspondant agencé sur le stator 1, lors du montage du corps de connecteur sur ce dernier.

De plus, comme déjà vu, le corps de connecteur 4 comporte à son extrémité opposée aux contacts un dispositif d'encliquetage sur le stator 1. Ce dispositif comprend un orifice 12 agencé sur une bride 13 disposée à l'extrémité du corps de connecteur 4 tournée vers l'entrée de clé 3. Une languette élastique associée conformée sur le stator 1 vient s'encliqueter dans cet orifice 12 en fin de course des nervures 11A, 11B, dans leur rail respectif.

En position montée, les ampoules Reed sont disposées de façon à chevaucher la face frontale de la came 9 portant l'aimant 6. Elles sont également avantageusement disposées avec leur plan de symétrie transversal sensiblement dans un même plan contenant également l'aimant 6. Ainsi, le champ magnétique induit par l'aimant les sollicite à proximité de ce plan de symétrie transversal, où leur sensibilité est maximale.

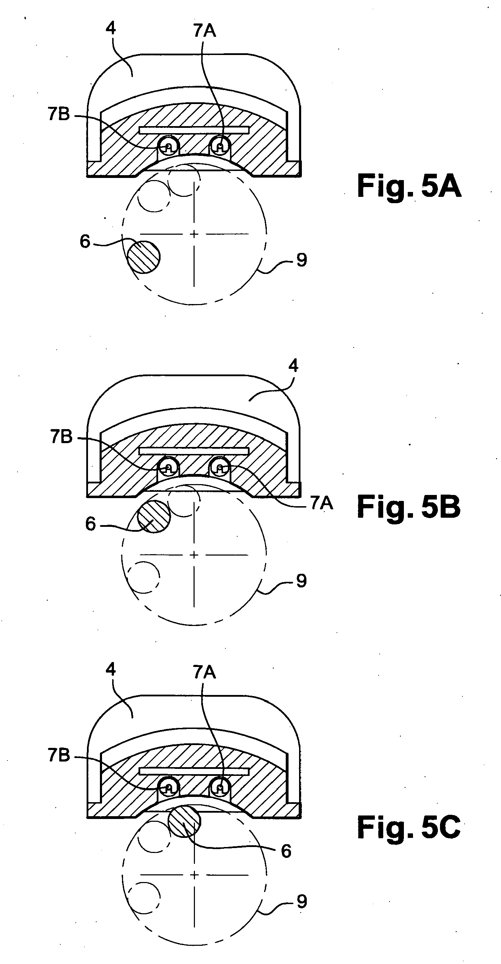

Le fonctionnement de l'interrupteur selon les positions du rotor 2 est illustré sur les figures 5A à 5C.

Selon l'exemple décrit, le verrou d'antivol peut prendre trois positions : position d'arrêt représentée sur la figure 5A, position de contact représentée sur la figure 5B, et la position de démarrage représentée sur la figure 5C. Il pourrait comprendre également une position « accessoires » et dans ce cas trois ampoules Reed seraient utilisées selon le même principe.

Les angles de rotation du rotor pour passer de l'une à l'autre des positions dépendent des exigences du constructeur automobile ou de normes nationales et les angles représentés sur les figures ne sont que des exemples.

En position d'arrêt, illustré sur la figure 5A, qui correspond à la position relative du verrou et de l'interrupteur après montage, l'aimant 6 est éloigné des ampoules Reed 7A, 7B, et ces ampoules sont toutes les deux ouvertes. Aucun signal électrique n'est donc transmis par le connecteur 9 à l'unité de commande qui lui est connectée.

La clé est tournée d'un premier angle pour faire venir le rotor dans la position de contact illustrée sur la figure 5B. L'aimant 6 est alors à proximité d'une des ampoules Reed 7B qui se ferme sous l'effet du champ magnétique. Deux contacts 10A et 10B sont alors commutés et transmettent un signal électrique à l'unité de commande qui assure l'alimentation des équipements électriques.

La clé peut être tournée d'un second angle pour faire tourner le rotor dans la position de démarrage illustrée sur la figure 5C. Durant cette rotation, l'ampoule 7B reste fermée et l'ampoule 7A se ferme, assurant la commutation des trois contacts 10A à 10C. Le signal électrique transmis à l'unité de commande assure le démarrage du moteur.

De cette position, la clé peut être dans un sens inverse pour revenir à la position illustrée sur la figure 5B où le démarreur n'est plus alimenté mais le moteur est en marche, l'ampoule 7A étant ouverte suite à l'éloignement de l'aimant 6. Puis, par une rotation supplémentaire dans le même sens, la clé est ramenée dans la position illustrée sur la figure 5A, en position d'arrêt où les deux ampoules Reed sont ouvertes.

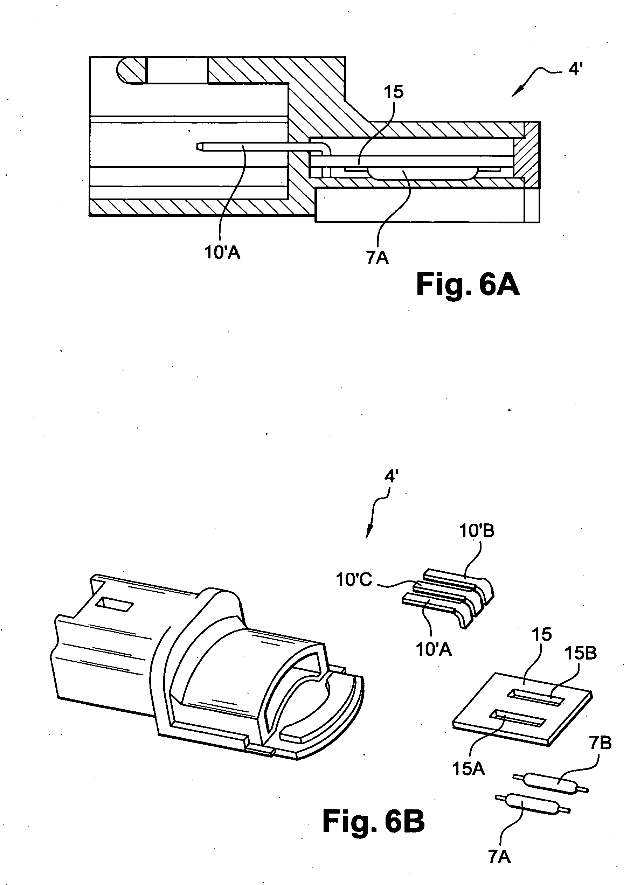

Les figures 6A et 6B représentent une variante de réalisation d'un interrupteur conforme à l'invention.

Cet interrupteur diffère de celui précédemment décrit par le fait les ampoules Reed 7A, 7B sont reliées aux contacts 10'A, 10'B, 10'C du connecteur par l'intermédiaire d'une carte de circuit imprimé 15.

Les ampoules Reed sont alors soudées sur la carte 15 qui présente deux fentes 15A et 15B dans lesquelles sont emboîtées les ampoules. Les contacts sont quant à eux soudés à proximité d'un côté de cette carte. Un fois les connexions effectuées, l'ensemble carte / ampoules Reed /contacts est inséré dans un espace formé dans le boîtier de l'interrupteur 4'.

## Revendications

1. verrou d'antivol comprenant un stator (1) et un rotor (2) pouvant être entraîné en rotation dans le stator et possédant au moins un aimant permanent (6) solidarisé au rotor (2), comprenant en outre un interrupteur, en particulier pour la mise en marche et l'arrêt d'au moins une unité d'opération d'un véhicule automobile, l'interrupteur comprenant au moins deux ampoules Reed (7A, 7B) pourvues de broches souples (8A, 8B) et reliées électriquement par leurs broches aux contacts (10A, 10B, 10C) d'un connecteur, **caractérisé en ce que** lesdites ampoules Reed sont disposées sur un corps de connecteur (4) fixé sur ledit stator (1) dans une position dite de fonctionnement et de façon amovible.

2. Verrou selon la revendication 1, **caractérisé en ce que** l'axe longitudinal des dites ampoules Reed est sensiblement parallèle à l'axe nord-sud du dit aimant, en position de fonctionnement.

3. Verrou selon la revendication 2, **caractérisé en ce que** l'axe longitudinal des dites ampoules Reed est sensiblement parallèle à l'axe longitudinal du rotor (2), lesdites ampoules Reed étant disposées avec leur plan de symétrie transversal sensiblement dans un même plan contenant également l'aimant (6) dans ladite position de fonctionnement.

4. Verrou selon l'une des revendications précédentes, **caractérisé en ce que** lesdites ampoules Reed sont directement fixées aux dits contacts (10A, 10B, 10C) du connecteur par leurs broches.

5. Verrou selon la revendication précédente, **caractérisé en ce que** lesdits contacts (10A, 10B, 10C) comportent des prolongements jusqu'aux broches (8A, 8B) des dites ampoules Reed.

6. Verrou selon l'une des revendications 1 à 3, **caractérisé en ce que** lesdites ampoules Reed sont reliées aux dits contacts (10A, 10B, 10C) du connecteur par l'intermédiaire d'une carte de circuit imprimé.

7. Verrou selon l'une des revendications précédentes, **caractérisé en ce que** lesdits contacts présentent un axe longitudinal sensiblement parallèle à celui des dites ampoules Reed.

8. Verrou selon l'une des revendications précédentes, **caractérisé en ce que** ledit corps de connecteur (4) peut être fixé au stator (1) par un agencement de rail et de glissière.

9. Verrou selon la revendication précédente, **caractérisé en ce que** ledit agencement de rail et de glissière est sensiblement parallèle à l'axe longitudinal du rotor (2).

10. Verrou selon la revendication précédente, **caractérisé en ce que** ledit corps de connecteur (4) comporte un dispositif d'encliquetage (5) sur le stator (2).

11. Verrou d'antivol selon l'une des revendications précédentes, **caractérisé en ce que** ledit aimant (6) est porté par la face frontale d'une came (9) solidarisée à l'extrémité interne du rotor (2).

12. Verrou selon la revendication précédente, **caractérisé en ce que** ledit aimant (6) est en matière plastoferrite et est surmoulé sur la dite came (9).

## Claims

1. An anti-theft lock comprising a stator (1) and a rotor (2) rotatively drivable in the stator and having at least one permanent magnet (6) integral with the rotor (2), further comprising a switch, particularly for turning on and off at least one operation unit of an automobile vehicle, the switch comprising at least two Reed bulbs (7A, 7B) provided with flexible pins (8A, 8B) and electrically connected through the pins thereof to contacts (10A, 10B, 10C) of a connector, **characterised in that** said Reed bulbs are provided on a connector body (4) attached to said stator (1) in a so-called operational position and in a removable way.

2. The lock according to claim 1, **characterised in that** the longitudinal axis of said Reed bulbs is substantially parallel to the north-south axis of said magnet, in the operational position.

3. The lock according to claim 2, **characterised in that** the longitudinal axis of said Reed bulbs is substantially parallel to the longitudinal axis of the rotor (2), said Reed bulbs being provided with the transverse symmetry plane thereof substantially in the same plane also comprising the magnet (6) in said operational position.

4. The lock according to one of the preceding claims, **characterised in that** said Reed bulbs are directly attached to said contacts (10A, 10B, 10C) of the connector through the pins thereof.

5. The lock according to the preceding claim, **characterised in that** said contacts (10A, 10B, 10C) comprise extensions to the pins (8A, 8B) of said Reed bulbs.

6. The lock according to one of claims 1 to 3, **characterised in that** said Reed bulbs are connected to said contacts (10A, 10B, 10C) of the connector through a printed circuit board.

7. The lock according to one of the preceding claims, **characterised in that** said contacts have a longitudinal axis substantially parallel to that of said Reed bulbs.

8. The lock according to one of the preceding claims, **characterised in that** said connector body (4) can be attached to the stator (1) by a rail and slide arrangement.

9. The lock according to the preceding claim, **characterised in that** said rail and slide arrangement is substantially parallel to the longitudinal axis of the rotor (2).

10. The lock according to the preceding claim, **characterised in that** said connector body (4) comprises a detent (5) on the stator (2).

11. The anti-theft lock according to one of the preceding claims, **characterised in that** said magnet (6) is carried by the frontface of a cam (9) integral with the inner end of the rotor (2).

12. The lock according to the preceding claim, **characterised in that** said magnet (6) is made of a plastoferrite material and is moulded over said cam (9).

## Patentansprüche

1. Diebstahlsicherungsriegel, umfassend einen Stator (1) und einen Rotor (2), der drehbar in dem Stator angetrieben werden kann und mindestens einen Dauermagneten (6) besitzt, der mit dem Rotor (2) fest verbunden ist, ferner umfassend einen Schalter, insbesondere zum Ein- und Ausschalten mindestens einer Betriebseinheit eines Kraftfahrzeugs, wobei der Schalter mindestens zwei Reed-Kolben (7A, 7B) umfasst, die mit nachgiebigen Stiften (8A, 8B) ausgestattet sind und elektrisch über ihre Stifte mit den Kontakten (10A, 10B, 10C) eines Steckverbinders verbunden sind, **dadurch gekennzeichnet, dass** die Reed-Kolben auf einem Steckverbinderkörper (4) auf dem Stator (1) in einer so genannten Betriebsposition und abnehmbar angeordnet sind.

2. Riegel nach Anspruch 1, **dadurch gekennzeichnet, dass** die Längsachse der Reed-Kolben in der Betriebsposition zur Nord-Süd-Achse des Magneten im Wesentlichen parallel ist.

3. Riegel nach Anspruch 2, **dadurch gekennzeichnet, dass** die Längsachse der Reed-Kolben zur Längsachse des Rotors (2) im Wesentlichen parallel ist, wobei die Reed-Kolben mit ihrer Quersymmetrieebene im Wesentlichen in der gleichen Ebene angeordnet sind, die auch den Magneten (6) in der Betriebsposition enthält.

4. Riegel nach einem der vorhergehenden Ansprüche, **dadurch gekennzeichnet, dass** die Reed-Kolben über ihre Stifte direkt an den Kontakten (10A, 10B, 10C) des Steckverbinders befestigt sind.

5. Riegel nach dem vorhergehenden Anspruch, **dadurch gekennzeichnet, dass** die Kontakte (10A, 10B, 10C) Verlängerungen bis zu den Stiften (8A, 8B) der Reed-Kolben umfassen.

6. Riegel nach einem der Ansprüche 1 bis 3, **dadurch gekennzeichnet, dass** die Reed-Kolben mit den Kontakten (10A, 10B, 10C) des Steckverbinders über eine Leiterplatte verbunden sind.

7. Riegel nach einem der vorhergehenden Ansprüche, **dadurch gekennzeichnet, dass** die Kontakte eine Längsachse aufweisen, die zu derjenigen der Reed-Kolben im Wesentlichen parallel ist.

8. Riegel nach einem der vorhergehenden Ansprüche, **dadurch gekennzeichnet, dass** der Körper des Steckverbinders (4) an dem Stator (1) durch eine Schienen- und Führungsanordnung befestigt sein kann.

9. Riegel nach dem vorhergehenden Anspruch, **dadurch gekennzeichnet, dass** die Schienen- und Führungsanordnung zur Längsachse des Rotors (2) im Wesentlichen parallel ist.

10. Riegel nach dem vorhergehenden Anspruch, **dadurch gekennzeichnet, dass** der Körper des Steckverbinders (4) eine Einrastvorrichtung (5) auf dem Stator (2) umfasst.

11. Diebstahlsicherungsriegel nach einem der vorhergehenden Ansprüche, **dadurch gekennzeichnet, dass** der Magnet (6) von der Vorderseite eines Nockens (9) getragen wird, der mit dem inneren Ende des Rotors (2) fest verbunden ist.

12. Riegel nach dem vorhergehenden Anspruch, **dadurch gekennzeichnet, dass** der Magnet (6) aus einem Plastoferritmaterial besteht und um den Nocken (9) umspritzt ist.
